# EUROPEAN PATENT SPECIFICATION

(11) **EP 0 310 280 B1**
(45) Date of publication and mention of the grant of the patent: **09.11.1994**
(21) Application number: 88308679.5
(22) Date of filing: 20.09.1988
(51) Int. Cl.: H02H 9/02

(54) **Electrical safety barriers**
Elektrische Sicherheitsbarrieren
Barrières électroniques de sécurité

(30) Priority: 26.09.1987 GB 8722680
(43) Date of publication of application: 05.04.1989
(73) Proprietor: MEASUREMENT TECHNOLOGY LIMITED, Luton Bedfordshire LU1 3JJ (GB)
(72) Inventor: Hutcheon, Ian Carrodus, Luton Bedfordshire LU2 7ES (GB); Squires, Robert William, Luton Bedfordshire LU2 9AN (GB)
(74) Representative: Thomson, Roger Bruce

(56) References cited:
- WO-A-86/02786
- DE-A- 2 213 243
- DE-A- 2 600 456
- DE-B- 1 816 553
- FR-A- 2 086 298
- US-A- 3 818 273
- US-A- 4 099 216

## Description

This invention relates to shunt-diode safety barriers, such as are used for example to protect electrical circuits and apparatus located in hazardous areas. The safety barrier restricts the voltage and current reaching these circuits and apparatus in the event of an electrical fault in the safe area. Any sparks then arising as a result of faults in the hazardous area are limited to a magnitude which will not ignite any flammable gases, liquids or other materials that may be present.

The present application is particularly concerned with the provision of overvolt protection for such barriers.

Most shunt-diode safety barriers are "fuse-protected". As shown in the exemplary known circuit of Fig. 1, which is very similar to the safety barriers described in DE-A-2 213 243, they include a fuse F, two or three chains of Zener or other diodes connected in shunt, and a terminating resistor R or its equivalent. In normal operation the barrier passes the desired signal and the diodes do not conduct. However, if the voltage applied to the barrier is too high, then the fuse F will blow and protect the diodes from damage. The diodes limit the output voltage of the barrier and the terminating resistor R limits the current.

Most barriers will transmit signals in either direction. Some are designed for uni-directional transmission. Two or more single-channel barriers in practice often are combined as multi-channel units for a particular measurement or control application.

The components of a barrier, including the fuse, normally are encapsulated in a casting compound to meet the requirements of certifying authorities. Consequently, the safety barrier cannot be repaired. If the fuse blows, then the barrier becomes useless and must be replaced by another barrier. In addition to the cost, this has the disadvantage that it causes the measurement or control loop to stop working.

In many applications, the circuits to which a safety barrier is connected in the safe area do not have the voltage and current capability to blow the fuse, and it is rare for safety barriers in this type of circuit to be put out of action. For example, the input circuits of amplifiers connected to hazardous-area sensors, and the output circuits of electronic controllers connected to hazardous-area control equipment, normally cannot deliver sufficient power.

However, there is a range of applications in which the fuse may be blown inadvertently during operation or initial installation. In most of these applications the barrier is connected to a power supply in the safe area. If the power supply voltage is inadequately stabilised, or if the supply malfunctions or is incorrectly adjusted, it may blow the fuses in all the barriers to which it is connected, sometimes several hundred barriers. The same effect can be caused by voltage surges on the supply lines when standby batteries are put on charge or heavy inductive loads are switched or if there are nearby lightning discharges. During initial installation, fuses may be blown if the power supply is erroneously connected to a barrier channel which is not designed to withstand the supply voltage.

Applications of this nature include the operation through a safety barrier of solenoid valves, alarms and light-emitting diodes in a hazardous area, and the operation of relays or other devices in a safe area through a safety barrier by a switch which is located in a hazardous area. All these examples require a source of power.

It is not practicable in many cases to adopt the obvious course of choosing a safety barrier with a higher voltage rating, since the barrier must then have a higher resistance and may not transmit sufficient power at the normal working voltage. This is particularly the case when the safety barrier has to be suitable for use with circuits in hazardous areas where easily ignitable gases, such as hydrogen, may be present.

One solution to this problem which is sometimes adopted is to fit an additional fuse in series with the supply to each barrier, and external to it. However, such additional fuses occupy valuable space, and the cost of installing them is significant. Moreover, they must have lower ratings than the fuses in the safety barriers so that they blow first. This therefore degrades the performance of the loop, for example by blowing if the barrier is short-circuited in the hazardous area. These additional fuses also increase the resistance of the loop.

An alternative known solution is to fit a second, replaceable fuse on the barrier itself. This takes up less space and saves the user trouble, but it suffers from the same disadvantage in that it degrades performance. It also increases the cost and size of the barrier.

Yet a further known solution is to make the only fuse in each barrier channel a replaceable item, with some form of "keying" to ensure replacement by another fuse of the correct value. Such a solution is acceptable to the certifying authorities in some countries, but is not acceptable in most countries.

Each of these three known "solutions" has the major disadvantage that the measurement or control loop will stop working if the fuse blows.

DE-B-1 816 553 describes a safety barrier for connection to a power supply, and comprises fuses, shunt diode means and current limiting circuits arranged in that order between the power supply and the load.

US-A-3 818 273 describes a barrier isolator device which includes an overload protection circuit.

WO-A-86/02786 describes a solid state circuit breaker which protects both the circuit and the breaker from large current surges. Protection of the load and of a shunt diode is effected by repeated opening of a semiconductor switch.

US-A-4099216 describes a fuseless safety barrier incorporating a current limiting circuit to prevent destruction of components under fault conditions.

It is an object of the present invention to provide a shunt-diode safety barrier with overvolt protection which is adapted for use with unregulated voltage supplies.

It is another object of the invention to provide shunt-diode safety barriers to give protection to switches and solenoids located in hazardous areas.

It is a further object of the invention to provide a shunt-diode safety barrier which is adaptable to either a 1-channel or a 2-channel barrier.

In accordance with the present invention there is provided a shunt-diode safety barrier arranged to be connected to a power supply and comprising shunt diode means, a fusible component on the power supply side of the shunt diode means, a current-limiting circuit connected in series with the fusible component and arranged to be connected in series with a load, and thermal protection means to prevent the barrier components from overheating if an excessive voltage is applied, characterised in that the current-limiting circuit is connected in series between the fusible component and the shunt diode means and is arranged so that the fusible component is protected against applied voltages greater than the normal maximum working voltage, and in that the thermal protection means comprises a Zener diode within the safety barrier and connected between the fusible component and the current-limiting circuit.

Many other methods of thermal protection have become known in combination with overvoltage clamping elements, but the arrangement in accordance with the invention has advantages.

The use of a current-limiting circuit within the safety barrier has a number of advantages. The barrier is allowed to operate essentially normally and transmit a signal, dependent on the supply voltage, up to the working voltage of the barrier. Additionally, the current-limiting circuit protects the fuse against applied voltages greater than the normal maximum working voltage. This is because the current-limiting circuit is normally "clamped", and introduces only a small voltage drop, but is arranged to limit the current to a value which will not blow the fuse should the voltage applied to the barrier be increased above the normal maximum working voltage. Yet a further advantage is that the use of a current-limiting circuit ensures that the fuse will not be blown by short circuits in a hazardous area. Furthermore, current-limiting circuits are simple and low in cost.

According to a preferred feature of the invention the safety barrier includes means to protect the fuse against the possible application of reverse voltages. This can be achieved by the inclusion of a diode connected in series with the fuse.

In order that the invention may be more fully understood, a number of embodiments of safety barrier in accordance with the invention will now be described by way of example and with reference to the accompanying drawings, in which:

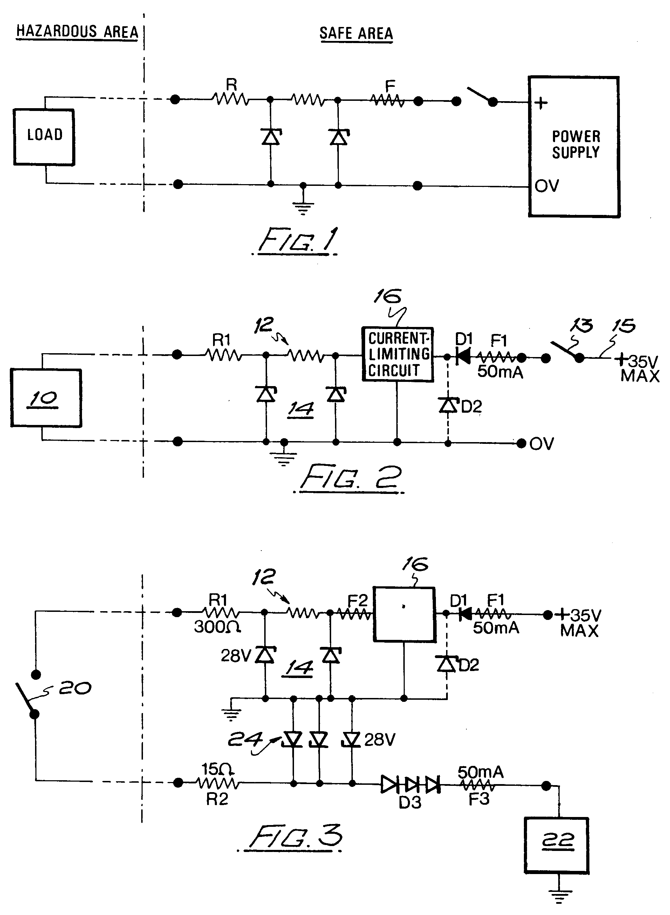

Fig. 1 is a schematic circuit diagram of a known shunt-diode safety barrier;
Fig. 2 is a schematic circuit diagram of a first embodiment of safety barrier in accordance with the present invention;
Fig. 3 is a schematic circuit diagram of a second embodiment of safety barrier in accordance with the present invention;
Fig. 4 is a schematic circuit diagram of a third embodiment of safety barrier in accordance with the invention;
Fig. 5 shows one example of a current-limiting circuit suitable for use in the safety barriers of Figs. 2, 3 and 4.
Fig. 6 shows a second example of current-limiting circuit; and
Fig. 7 shows a third example of a suitable current-limiting circuit.

In the embodiment shown in Fig. 2, a solenoid valve, alarm, array of light-emitting diodes, etc. 10 is positioned within a hazardous area and is operated through a shunt-diode safety barrier indicated generally at 12 by a switch 13, the safety barrier and switch being located in a safe area. The numerical values given in the drawings for the various electrical components are by way of example only and are not to be regarded as having any limiting significance. The safety barrier is connected to a power supply 15, indicated as +35V. maximum. As the barrier has built-in overvolt protection the power supply 15 can vary over a wide voltage range without requiring the closely regulated power supply needed for conventional barriers. The safety barrier 12 comprises a fuse F1, a chain or chains of Zener or other diodes 14, and a terminating resistance R1. Connected between the fuse F1 and the diode chain 14 is a current-limiting circuit indicated generally at 16. A diode D1 is connected in series with the fuse F1 between the fuse and the current-limiting circuit 16 in order to protect the fuse against the possible application of reverse voltages. This is an optional feature in the safety barrier. With the incorporation of electronic circuits within a safety barrier, such as the current-limiting circuit 16, it is necessary to protect the barrier components from overheating if an excessive voltage is applied. This is achieved here by providing a suitable thermal-protection Zener diode D2 of relatively high voltage within the safety barrier between the fuse F1 and the current-limiting circuit 16.

The current-limiting circuit 16 is normally "clamped", and introduces only a small voltage drop, but is arranged to limit the current to a value which will not blow the fuse F1 if the voltage applied to the barrier 12 is increased above the normal maximum working voltage. It is an important feature of the safety barrier of the present invention that the current-limiting circuit 16 is positioned between the safety fuse F1 and the shunt-diode elements of the safety barrier, i.e. is provided at the safe area end of the safety barrier.

In a modified version of the safety barrier shown in Fig. 2 a second fuse can be included, connected in series with the current-limiting circuit 16 on the hazardous area side thereof, between the circuit 16 and the shunt diodes 14. In this arrangement the thermal protection fuse F1 is used solely to protect Zener diode D2, and the second fuse protects the Zener diodes 14. Some certification authorities will accept this modified version without fuse F1 and diode D2 being fitted.

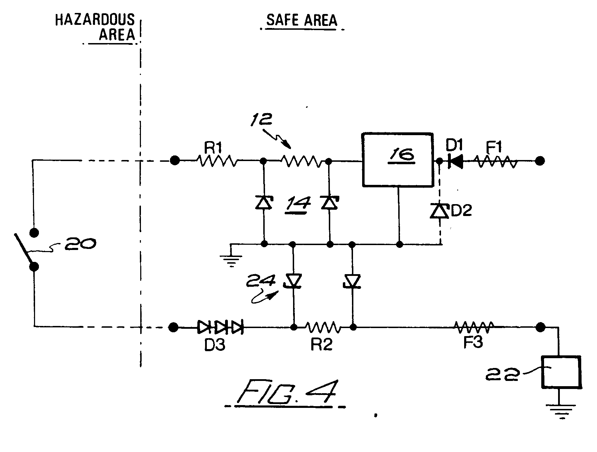

Fig. 3 shows a second embodiment where a switch 20 is located within the hazardous area and is arranged to operate a load 22, for example a relay, which is within the safe area, via the safety barrier. Hazardous-area switches are often part of supervisory systems which ensure that the process is safe. Therefore, the paramount requirement is that the circuits containing them should "fail safe" in the event of an earth fault in the hazardous area, i.e. the load should become deenergised as with an open switch. This requires two barrier channels. The embodiments shown in Figs. 3 and 4 are 2-channel barriers with overvoltage protection. The one channel, connected to the power supply (+35V. max.), is as shown in Fig. 2 with the addition of the aforesaid second fuse F2, while the second channel, as shown in Fig. 3, comprises a resistor R2, a series of two or three low-power Zener diodes 24 connected in shunt, and a fuse F3. A series of two or three conventional diodes D3 are provided between the shunt diodes 24 and the fuse F3 to serve as a diode-return barrier. Alternatively, the second channel could be as shown in Fig. 4. Here the second channel comprises resistor R2, a series of two or three Zener diodes 24 connected in shunt, and a fuse F3. A series of two or three conventional or Schottky diodes D3 are provided at a hazardous area end of this second channel.

Figs. 5 to 7 show three examples of current-limiting circuit which can be used as the circuit 16 in Figs. 2, 3 and 4. In each of these Figures the thermal protection Zener diode D2 is also shown, together with the fuse F1, although neither component is part of the current-limiting circuit itself. The current-limiting circuit shown in Fig. 5 comprises first and second transistors T1 and T2, a resistor R3 in series with the base of transistor T1 and a resistor R4 connected between the fuse F1 and the emitter of transistor T1. This circuit has a low series voltage drop when clamped. It draws a small current in shunt, which is not significant for most applications.

The circuit shown in Fig. 6 comprises transistors T3 and T4, and associated resistors R5 and R6. This circuit draws no shunt current, but has a greater series voltage drop.

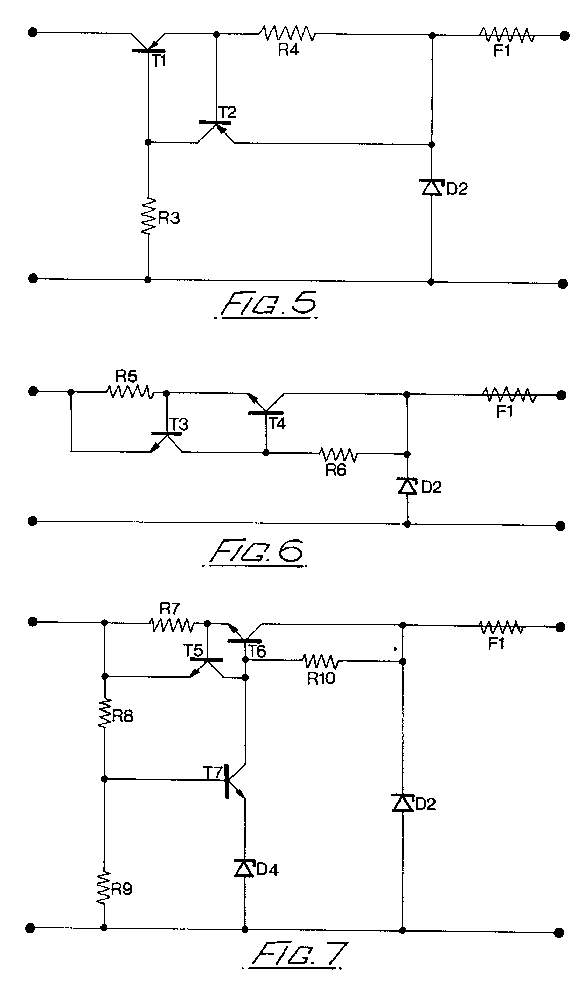

The circuit shown in Fig. 7 provides voltage regulation in addition, such that the current does not suddenly rise to the limiting value when the supply voltage exceeds the normal working voltage of the barrier. This eases the power supply requirement for a system having many barriers. The current-limiting circuit comes into play in practice only if the output of the barrier is shorted. This circuit comprises three transistors T5, T6 and T7 with associated resistors R7 to R10 and a Zener diode D4 connected to the emitter of transistor T7.

## Claims

1. A shunt-diode safety barrier (12) arranged to be connected to a power supply (15) and comprising shunt diode means (14; 24), a fusible component (F1; F2; F3) on the power supply side of the shunt diode means, a current-limiting circuit (16) connected in series with the fusible component (F1; F2; F3) and arranged to be connected in series with a load (10; 22), and thermal protection means to prevent the barrier components from overheating if an excessive voltage is applied, characterised in that the current-limiting circuit (16) is connected in series between the fusible component (F1) and the shunt diode means (14; 24) and is arranged so that the fusible component (F1) is protected against applied voltages greater than the normal maximum working voltage, and in that the thermal protection means comprises a Zener diode (D2) within the safety barrier and connected between the fusible component (F1) and the current-limiting circuit (16).

2. A safety barrier according to claim 1, characterised by two fuses (F1, F2), one of said fuses (F1) being connected between the current-limiting circuit (16) and the power supply and the other of said fuses (F2) being connected between the current-limiting circuit (16) and the shunt diode means (14).

3. A safety barrier according to claim 1 or 2, which is a 1-channel barrier (12) arranged to be connected to a solenoid, alarm or LEDs (10) within a hazardous area.

4. A safety barrier according to claim 1 or 2, which is a 2-channel barrier (12) arranged to be connected to a switch (20) within a hazardous area.

5. A safety barrier according to claim 4, characterised in that the one channel for connection to the power supply includes the current-limiting circuit (16), and the other channel comprises further shunt diode means (24), at least one fuse (F3), and diode means (D3) connected in series with said at least one fuse (F3) between said fuse and the hazardous-area switch (20).

6. A safety barrier according to any preceding claim, characterised by means (D1) to protect the or at least one of the fusible components against the application of reverse voltages.

7. A safety barrier according to any preceding claim, characterised in that the power supply is an unregulated voltage supply.

## Patentansprüche

1. Shuntdioden-Sicherheitsbarriere (12), angeordnet zum Anschluß an eine Spannungsversorgung (15) und umfassend Shuntdiodenmittel (14; 24), ein Schmelzbauteil (F1; F2; F3) auf der Spannungsversorgungsseite der Shuntdiodenmittel, einen in Reihe mit dem Schmelzbauteil (F1; F2; F3) angeschlossenen und zur Schaltung in Reihe mit einer Last (10; 22) angeordneten Strombegrenzerkreis (16) und Wärmeschutzmittel, um eine überhitzung der Barrierebauteile zu verhindern, wenn eine übermäßige Spannung angelegt wird, dadurch **gekennzeichnet**, daß der Strombegrenzerkreis (16) in Reihe zwischen dem Schmelzbauteil (F1) und dem Shuntdiodenmittel (14; 24) geschaltet ist und so angeordnet ist, daß das Schmelzbauteil (F1) gegen angelegte Spannungen größer als die normale maximale Arbeitsspannung geschützt ist, und daß das Wärmeschutzmittel eine Zenerdiode (D2) innerhalb der Sicherheitsbarriere und angeschlossen zwischen dem Schmelzbauteil (F1) und dem Strombegrenzerkreis (16) umfaßt.

2. Sicherheitsbarriere nach Anspruch 1, **gekenn****zeichnet** durch zwei Sicherungen (F1, F2), wobei eine der Sicherungen (F1) zwischen dem Strombegrenzerkreis (16) und der Spannungsversorgung angeschlossen ist und die andere der Sicherungen (F2) zwischen dem Strombegrenzerkreis (16) und dem Shuntdiodenmittel (14) angeschlossen ist.

3. Sicherheitsbarriere nach Anspruch 1 oder 2, die eine 1-Kanal-Barriere (12) ist, angeordnet zum Anschließen an ein Solenoid, Alarm oder LEDs (10) in einem Gefahrenbereich.

4. Sicherheitsbarriere nach Anspruch 1 oder 2, die eine 2-Kanal-Barriere (12) ist, angeordnet zum Anschließen an einen Schalter (20) in einem Gefahrenbereich.

5. Sicherheitsbarriere nach Anspruch 4, dadurch **ge****kennzeichnet**, daß der eine Kanal für einen Anschluß an die Spannungsversorgung den Strombegrenzerkreis (16) enthält und der andere Kanal weiter Shuntdiodenmittel (24), wenigstens eine Sicherung (F3) und Diodenmittel (D3), angeschlossen in Reihe mit der wenigstens einen Sicherung (F3) zwischen der Sicherung und dem Gefahrenbereichsschalter (20) umfaßt.

6. Sicherheitsbarriere nach einem beliebigen vorhergehenden Anspruch, **gekennzeichnet** durch Mittel (D1) zum Schützen des oder wenigstens eines der Schmelzbauteile gegen das Anlegen von Rückwärtsspannungen.

7. Sicherheitsbarriere nach einem beliebigen vorhergehenden Anspruch, dadurch **gekennzeichnet**, daß die Spannungsversorgung eine ungeregelte Spannungsversorgung ist.

## Revendications

1. Barrage de sécurité (12) à diode-shunt agencé de manière à être relié à une alimentation en puissance (15) et comprenant des moyens à diode-shunt (14; 24), un composant fusible (F1; F2; F3) situé du côté alimentation en puissance des moyens à diode-shunt, un circuit (16) limiteur de courant branché en série avec le composant fusible (F1; F2; F3) et disposé de manière à être branché en série avec une charge (10; 22), et des moyens de protection thermique destinés à empêcher les composants du barrage de surchauffer lorsqu'une tension excessive est appliquée,
caractérisé en ce que le circuit (16) limiteur de courant est branché en série entre le composant fusible (F1) et les moyens à diode-shunt (14; 24) et est agencé de manière que le composant fusible (F1) soit protégé contre les tensions appliquées supérieures à la tension normale maximale de travail, et en ce que les moyens de protection thermique comprennent une diode Zener (D2) prévue à l'intérieur du barrage de sécurité et branchée entre le composant fusible (F1) et le circuit limiteur de courant (16).

2. Barrage de sécurité selon la revendication 1, caractérisé par deux fusibles (F1, F2), l'un desdits fusibles (F1) étant branché entre le circuit (16) limiteur de courant et l'alimentation en puissance, et l'autre desdits fusibles (F2) étant branché entre le circuit (16) limiteur de courant et les moyens à diode-shunt (14).

3. Barrage de sécurité selon la revendication 1 ou 2, qui est un barrage (12) à 1 canal agencé de manière à être relié à un solénoïde, une alarme ou des DEL (10) situés à l'intérieur d'une zone dangereuse.

4. Barrage de sécurité selon la revendication 1 ou 2, qui est un barrage (12) à 2 canaux agencé de manière à être relié à un commutateur (20) situé à l'intérieur d'une zone dangereuse.

5. Barrage de sécurité selon la revendication 4, caractérisé en ce que ledit un canal destiné à être relié à l'alimentation en puissance comprend le circuit (16) limiteur de courant, et que l'autre canal comprend d'autres moyens à diode-shunt (24), au moins un fusible (F3), et des moyens à diode (D3) branchés en série, en conjonction avec ledit au moins un fusible (F3), entre ledit fusible et le commutateur (20) situé dans la zone dangereuse.

6. Barrage de sécurité selon l'une quelconque des revendications précédentes, caractérisé par des moyens (D1) destinés à protéger les composants ou l'un au moins des composants fusibles contre l'application de tensions inverses.

7. Barrage de sécurité selon l'une quelconque des revendications précédentes, caractérisé en ce que l'alimentation en puissance est une alimentation de tension non régulée.
